# EUROPEAN PATENT SPECIFICATION

(11) **EP 0 783 837 B1**
(45) Date of publication and mention of the grant of the patent: **03.04.2002**
(21) Application number: 97300100.1
(22) Date of filing: 09.01.1997
(51) Int. Cl.: A21C 3/02

(54) **Method and apparatus for joining dough blocks**
Verfahren und Vorrichtung zum Verbinden von Teigblöcken
Procédé et appareil pour joindre des blocs de pâte

(30) Priority: 09.01.1996 JP 1944096
(43) Date of publication of application: 16.07.1997
(73) Proprietor: RHEON AUTOMATIC MACHINERY CO. LTD., Utsunomiya-shi Tochigi-ken (JP)
(72) Inventor: Morikawa, Michio, Utsunomiya-shi, Tochigi-ken (JP)
(74) Representative: Leale, Robin George

(56) References cited:
- EP-A- 0 251 138
- EP-A- 0 326 404
- EP-A- 0 545 725
- EP-A- 0 657 101
- EP-A- 0 744 126

## Description

This invention relates to a method and an apparatus for joining dough blocks to each other, and thereby supplying a continuous sheet of dough. More particularly, the invention relates to a method and apparatus for joining successive kneaded dough blocks to each other so as to join the gel structures of the dough blocks to each other, when a plurality of kneaded dough blocks are supplied to a production line.

In a known apparatus, a dough sheet is made from a kneaded dough block and then parts of the sheet are cut away from the dough sheet for production. Each dough sheet has a volume corresponding to the volume of the kneaded dough block as supplied. The entire dough sheet is in one production lot, or each part of the dough sheet is in a production lot. When one dough sheet is in a production lot, time is lost between operations on the successive dough sheets as they are fed by a conveyor. Also, fragments remain after parts are cut away from the dough sheets for production.

If necessary, dough sheets may be joined to each other by a manual operation. That is, the rear end of one dough sheet is laid on the front end of another dough sheet, and the ends are then manually pressed together. There is no apparatus for joining dough sheets to each other. Thus, such a manual operation must be carried out every time that a following dough sheet is supplied, so that much manual work is needed to join the dough sheets together. In a production line for bread, unmanned production is usually performed to make bread from dough sheets that have the same conditions in their degree of composition and kneading, because technology to make a thin dough sheet has been improved and is now broadly used. However, when many kinds of breads that have several shapes and additions, such as a filling, are made on the same production line, much manual work is needed to join dough sheets together whenever a following dough sheet is supplied.

A unit of gel structure is formed for each dough block that is made by a mixing operation. Thus, for each lot, a gel structure in a dough block is separated from that in another dough block, so that fragments of the dough blocks remain after parts are cut away from them.

EP 0744126A which is prior art against the present application under A54(3) EPC, discloses an apparatus for joining dough blocks to each other, comprising a plurality of horizontally opposed pairs of rollers arranged in a plurality of tiers to define a substantially vertically extending passage for dough, the rollers being rotatable and the distances between the rollers of the pairs increasing in the upward direction, and means for continually increasing and decreasing the distances between the rollers of the pairs when dough blocks are supplied therebetween, so that the rollers apply pressure to the dough blocks or release pressure therefrom as the dough blocks are impelled downwardly by the pressing and releasing effect and the rotation of the rollers, whereby the growth of gluten and the joining of gel structures of the dough blocks are accelerated, and a continuous belt-like dough sheet is found.

Viewed from one aspect the present invention provides an apparatus for joining dough blocks to each other, comprising a plurality of horizontally opposed pairs of rollers arranged in a plurality of tiers to define a substantially vertically extending passage for dough, the rollers being rotatable, the lower rollers being arranged to be driven at a lower circumferential speed than the upper rollers, and the distances between the rollers of the pairs increasing in the upward direction, and means for continually increasing and decreasing the distances between the rollers of the pairs when dough blocks are supplied therebetween, so that the rollers apply pressure to the dough blocks or release pressure therefrom as the dough blocks are impelled downwardly by the pressing and releasing effect and the rotation of the rollers, whereby the growth of gluten and the joining of gel structures of the dough blocks are accelerated, and a continuous belt-like dough sheet is made.

Viewed from another aspect the invention provides a method of joining dough blocks to each other by means of a plurality of horizontally opposed pairs of rollers arranged in a plurality of tiers to define a substantially vertically extending passage for dough, the rollers being rotatable, the lower rollers being arranged to be driven at a lower circumferential speed than the upper rollers, and the distances between the roller of the pairs increasing in the upward direction, such method comprising continually increasing and decreasing the distances between the rollers of the pairs when dough blocks are supplied therebetween, so that the rollers apply pressure to the dough blocks and release pressure therefrom as the dough blocks are impelled downwardly by the pressing and releasing effect and the rotation of the rollers, whereby the growth of gluten and the joining of gel structures of the dough blocks are accelerated, and a continuous belt-like dough sheet is formed.

Two embodiments of the invention will now be described by way of example and with reference to the accompanying drawings, in which:-
Fig. 1 is a schematic side view of a bread production apparatus that includes an apparatus for joining dough blocks to each other according to this invention;
Fig. 2 is an enlarged schematic side view of the apparatus for joining dough blocks to each other as in Fig. 1;
Fig. 3 is a schematic side view to explain the operation of the apparatus of Fig. 2; and
Fig. 4 is a schematic side view of another embodiment of apparatus for joining dough blocks to each other, in accordance with the invention.

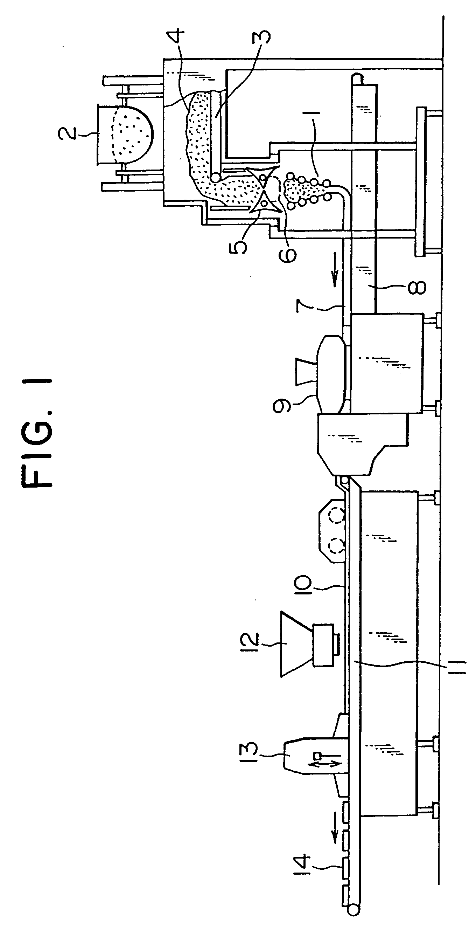

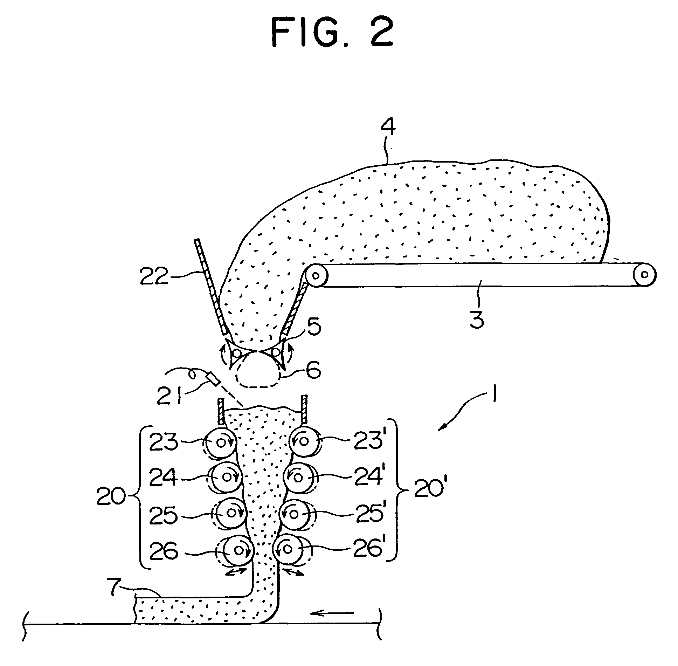

Fig. 1 shows a bread-making apparatus that includes an apparatus 1 for joining dough blocks to each other. A bowl 2 mixes and kneads materials to make dough. Dough 4 is supplied from the bowl 2 on a conveyor or a dough feeder 3. The dough feeder 3 feeds the dough, and supplies it to the joining apparatus 1 in response to signals from a sensor 21 (see Fig. 2) as explained below. The joining apparatus joins dough blocks to each other to provide a long and continuous belt-like dough sheet 7 which is fed from a bottom opening on to a first conveyor 8. The dough is not separated. The first conveyor 8 feeds the dough 7 to a dough extending apparatus 9. The extending apparatus 9 presses and extends the dough 7 to make a dough sheet 10 that has a predetermined thickness and width that are required to make bread in a desired fashion. The dough extending apparatus 9 feeds the dough sheet 10 to a conveyor 11. A depositing apparatus 12 is located above the conveyor 11 to supply a filling such as jam or meat onto the dough sheet 10. A cutting apparatus 13 positioned over the conveyor 11 moves vertically such that the dough sheet 10 is cut into pieces of a desired length and width. Also, the cutting apparatus 13 may provide desired shapes to the pieces. The resulting dough pieces 14 are then continuously output from the cutting apparatus.

Fig. 2 is an enlarged view of part of the apparatus of Fig. 1. A hopper 22 is positioned at the downstream end of the dough feeder 3. Rotatable cutter blades 5 are positioned at a bottom opening of the hopper 22. The joining apparatus 1 is located under the opening of the hopper 22. Sensor 21 is positioned near an upper opening of the joining apparatus 1, and senses when the amount of dough in the joining apparatus has decreased to such an extent that the upper surface of the dough is below a predetermined level. The sensor 21 then outputs a signal so that the dough feeder 3 is operated to feed dough 4 into the hopper 22. Simultaneously the dough cutter blades 5 rotate. As the dough 4 is supplied from the dough feeder 3 to the hopper 22, a dough block 6 is cut off from the dough 4 by the blades 5 at the bottom opening, which block thus has a certain volume. The dough block 6 falls into the joining apparatus 1. As a result, the dough 4 is kept above a predetermined level in the joining apparatus.

The joining apparatus includes a stack 20 of circular cylindrical rollers 23,24,25, and 26 and a stack 20' of similar rollers 23', 24', 25', and 26'. The stacks of rollers 23-26 and 23'-26' are arranged like a "V". Each roller of each group is located opposite a corresponding roller of the other group in a horizontal plane, as a pair. Thus the rollers are arranged in tiers. Opposite rollers in said pairs are rotated in opposite directions, by suitable driving means (not shown). The rollers of each pair are arranged to swing or move linearly towards and away from each other substantially in a horizontal plane, so that the gaps between them are continually increased or decreased. When the opposite rollers move towards each other, the dough between them is pressed. When the rollers move away from each other, the pressure is removed from the dough.

The circumferential speeds of the lower rollers of the stacks are lower than those of the upper rollers of the stacks.

When the rollers of an opposite roller pair move towards and away from each other, and rotate at predetermined speeds, the dough is repeatedly pressed and released from pressure. As a result, the gluten in the dough increases and the gel structures of the successive dough blocks 6 are joined to each other.

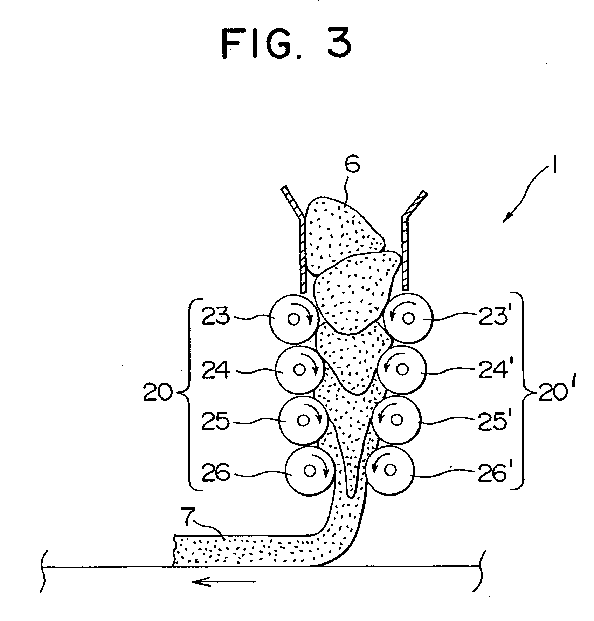

Fig. 3 shows the joining apparatus 1, when set up so that the circumferential speeds of the lower rollers of the stacks are lower than those of the upper rollers. For, example, the speeds of the rollers 25, 25', and 26,26' are lower than those of the rollers 23, 23' and 24, 24'. Parts of the surfaces of each dough block 6 that contact the upper rollers 23, 23', and 24, 24' are drawn down as they rotate. Then the parts of the surface of each dough block 6 that contact the lower rollers 25,25', and 26,26', and/or other parts thereof, are drawn towards the bottom of the joining apparatus as those rollers rotate. Thus, the parts of the dough block 6 that contact the upper rollers flow faster than those parts that contact the lower rollers.

However, parts of each dough block 6 located in the middle region between the opposite roller pairs, which parts do not contact any roller, flow faster than the parts that contact the rollers. This is because the pressures caused by the opposite roller pairs in each dough block 6 when they move towards each other, urge the dough blocks directly towards the bottom opening, rather than the dough blocks being drawn down only by the rotation of the rollers. Thus, as shown in Fig. 3, parts of each dough block 6 that do not contact the rollers and that are generally positioned in the middle region between the opposite roller pairs, flow down faster than those parts which contact the rollers.

In more detail, the bottom surface of a dough block 6 is generally substantially flat when the dough block is supplied from the hopper 22 onto the top dough block already in the joining apparatus 1. As the new dough block is drawn down into the inside of the joining apparatus, the surface of the block that contacts the upper surface of the next lower dough block drops, in the middle region between the opposite roller pairs, towards the inside of the next lower dough block, so as to become somewhat V-shaped. This V-shaped part is gradually elongated downwards, so that the surface areas of adjacent dough blocks that contact each other are correspondingly increased. Then the layer extends longitudinally. At the same time the roller pairs move towards and away from each other, to successively press the dough block and release the pressure from it so that the contacting surfaces are vibrated by such motions of the rollers. As a result the adhesion between the contacting surfaces of the adjacent dough blocks is increased. Also, the receding and approaching movements of the rollers function as a tapping motion on the dough blocks, which generates a thixotropy effect. Thus the flowage of the dough is increased and the joining of the gluten in the dough is accelerated. Finally, the joining apparatus 1 supplies a continuous belt-like dough sheet 7 to the first conveyor 8.

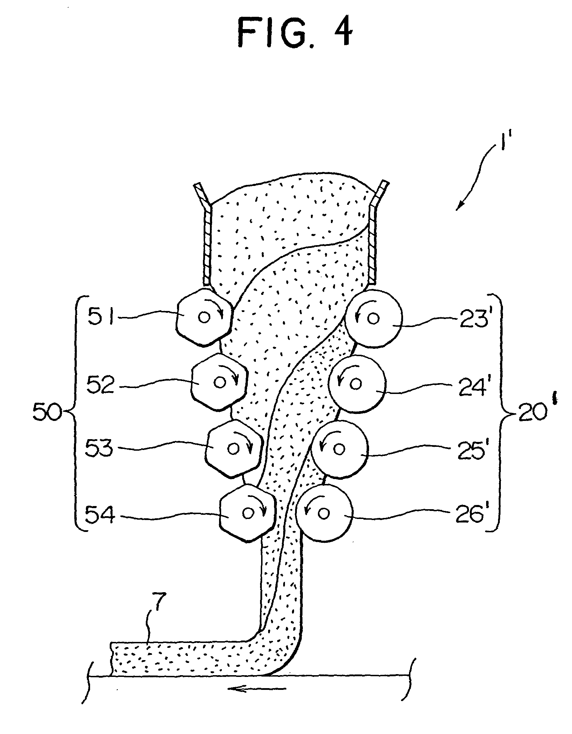

Fig. 4 shows another embodiment of joining apparatus, designated 1'. It comprises a stack 50 of rollers 51,52,53, and 54, and a stack 20' of rollers 23', 24', 25', and 26' as in the first embodiment. The cross-sectional shape of each roller of the stack 50 is hexagonal. These hexagonal rollers impel the dough more strongly than do the circular cylindrical rollers of stack 20', so that each separated dough block 6 is modified more effectively to long continuous dough layers along the longitudinal direction of the flow of the dough, which layers have wide contacting areas to contact each other. Thus, the thixotropy effect is caused, resulting in the union of the gel structures of the dough layers.

Polygonal configurations may thus be used for the cross-sectional shape of the rollers. Also, polygonal rollers may be used for the upper rollers of the joining apparatus in Fig. 1.

In the above embodiments, the rollers of either or both of the roller stacks 20 and 20', and either or both of the roller stacks 20' and 50, is/are reciprocally swung or reciprocally moved linearly towards and away from each other. However, the invention is not limited to these configurations. For example, the distances between the opposite roller pairs may be changed so that their pressing movements are sequentially generated between them from above, downwards. Also, the distances between the opposite roller pairs may be alternately changed in the vertical direction such that the pressing movements between the opposite roller pairs are alternately effected in the vertical direction.

By this invention, at least in its preferred embodiments, gel structures in respective dough blocks can be joined to each other by repeatedly applying pressing and vibrating operations to the dough blocks, so that the dough blocks are deformed and piled upon each other to form layers. Thus, a continuous belt-like dough web can be formed.

It will thus be seen that the present invention, at least in its preferred embodiments, provides a method and apparatus for automatically joining a following dough block to a dough block previously provided, so that a very long continuous dough sheet is automatically made, and so that unmanned production can be achieved over 24 hours.

The invention at least in its preferred forms allows gel structures of dough blocks to be automatically joined to each other. It also allows several kinds of bread to be produced during a non-stop production process. In a conventional apparatus there are many production lots corresponding to the mixing operations of the dough. This invention allows a continuous dough sheet corresponding to one production lot to be made and thus allows the segments of dough sheets to be minimized. Also, it allows the time until a following dough sheet is received to be minimized.

## Claims

1. Apparatus for joining dough blocks (6) to each other, comprising a plurality of horizontally opposed pairs of rollers (20,20',50) arranged in a plurality of tiers to define a substantially vertically extending passage for dough, the rollers being rotatable, the lower rollers being arranged to be driven at a lower circumferential speed than the upper rollers, and the distances between the rollers of the pairs increasing in the upward direction, and means for continually increasing and decreasing the distances between the rollers of the pairs when dough blocks are supplied therebetween, so that the rollers apply pressure to the dough blocks or release pressure therefrom as the dough blocks are impelled downwardly by the pressing and releasing effect and the rotation of the rollers, whereby the growth of gluten and the joining of gel structures of the dough blocks are accelerated, and a continuous belt-like dough sheet is made.

2. Apparatus as claimed in claim 1, wherein at least some of the said rollers are circular cylindrical.

3. Apparatus as claimed in claim 1 or 2, wherein at least some of the said rollers are polygonal cylindrical.

4. Apparatus as claimed in claim 1, 2 or 3, wherein a cutter means (5) is provided near an inlet opening of the apparatus to cut out dough blocks of a predetermined volume from a dough mass supplied to the apparatus.

5. Apparatus as claimed in claim 4, wherein a sensor means (21) is provided to sense the level of dough in the apparatus and to provide a signal to operate the said cutter means (5).

6. A method of joining dough blocks (6) to each other by means of a plurality of horizontally opposed pairs of rollers (20,20',50) arranged in a plurality of tiers to define a substantially vertically extending passage for dough, the rollers being rotatable, the lower rollers being arranged to be driven at a lower circumferential speed than the upper rollers, and the distances between the rollers of the pairs increasing in the upward direction, such method comprising continually increasing and decreasing the distances between the rollers of the pairs when dough blocks are supplied therebetween, so that the rollers apply pressure to the dough blocks and release pressure therefrom as the dough blocks are impelled downwardly by the pressing and releasing effect and the rotation of the rollers, whereby the growth of gluten and the joining of gel structures of the dough blocks are accelerated, and a continuous belt-like dough sheet is formed.

## Patentansprüche

1. Vorrichtung zum Vereinigen von Teigblöcken (6) miteinander, umfassend eine Mehrzahl von horizontal gegenüberliegenden Paaren von Rollen (20, 20', 50), die in einer Mehrzahl von Lagen angeordnet sind, um einen sich im Wesentlichen vertikal erstreckenden Durchgang für Teig zu bestimmen, wobei die Rollen drehbar sind, die unteren Rollen so angeordnet sind, dass sie mit einer geringeren Umfangsgeschwindigkeit angetrieben werden als die oberen Rollen, und die Abstände zwischen den Rollen der Paare sich in Aufwärtsrichtung vergrößern, und eine Einrichtung zum kontinuierlichen Vergrößern und Verkleinern der Abstände zwischen den Rollen der Paare, wenn Teigblöcke zwischen ihnen zugeführt werden, so dass die Rollen Druck an die Teigblöcke anlegen oder Druck von diesen wegnehmen, während die Teigblöcke durch die Drück- und Wegnahmewirkung und die Drehung der Rollen nach unten getrieben werden, wodurch das Anwachsen von Gluten und die Verbindung bzw. Vereinigung von Gelstrukturen der Teigblöcke beschleunigt werden und eine kontinuierliche bandartige Teigbahn hergestellt wird.

2. Vorrichtung nach Anspruch 1, in welcher wenigstens einige der Rollen kreisförmig zylindrisch sind.

3. Vorrichtung nach Anspruch 1 oder 2, in welcher wenigstens einige der Rollen vieleckig zylindrisch sind.

4. Vorrichtung nach Anspruch 1, 2 oder 3, in welcher eine Schneideinrichtung (5) nahe einer Einlassöffnung der Vorrichtung vorgesehen ist, um Teigblöcke eines vorbestimmten Volumens von einer der Vorrichtung zugeführten Teigmasse auszuschneiden.

5. Vorrichtung nach Anspruch 4, in welcher eine Fühlereinrichtung (21) vorgesehen ist, um die Höhe des Teigs in der Vorrichtung festzustellen und ein Signal zu schaffen, um die Schneideinrichtung (5) zu betätigen.

6. Verfahren zum Vereinigen von Teigblöcken (6) miteinander durch eine Mehrzahl von horizontal gegenüberliegenden Paaren von Rollen (20, 20', 50), die in einer Mehrzahl von Lagen angeordnet sind, um einen sich im Wesentlichen vertikal erstreckenden Durchgang für Teig zu bestimmen, wobei die Rollen drehbar sind, die unteren Rollen so angeordnet sind, dass sie mit einer geringeren Umfangsgeschwindigkeit angetrieben werden als die oberen Rollen, und die Abstände zwischen den Rollen der Paare sich in Aufwärtsrichtung vergrößern, wobei ein solches Verfahren das kontinuierliche Vergrößern und Verkleinern der Abstände zwischen den Rollen der Paare, wenn Teigblöcke zwischen ihnen zugeführt werden, aufweist, so dass die Rollen Druck an die Teigblöcke anlegen oder Druck von diesen wegnehmen, während die Teigblöcke durch die Drück- und Wegnahmewirkung und die Drehung der Rollen nach unten getrieben werden, wodurch das Anwachsen von Gluten und die Verbindung bzw. Vereinigung von Gelstrukturen der Teigblöcke beschleunigt werden und eine kontinuierliche bandartige Teigbahn hergestellt wird.

## Revendications

1. Appareil pour joindre entre eux des blocs (6) de pâte, comportant plusieurs paires opposées horizontalement de rouleaux (20, 20', 50) agencés en plusieurs étages pour définir un passage pour la pâte s'étendant sensiblement verticalement, les rouleaux pouvant tourner, les rouleaux inférieurs étant agencés de façon à être entraînés à une vitesse circonférentielle inférieure à celle des rouleaux supérieurs, et les distances entre les rouleaux des paires augmentant dans le sens vers le haut, et des moyens pour augmenter et diminuer en continu les distances entre les rouleaux des paires lorsque des blocs de pâte sont amenés entre eux, afin que les rouleaux appliquent une pression aux blocs de pâte ou en relâchent la pression pendant que les blocs de pâte sont propulsés vers le bas par l'effet de pression et de relâchement et par la rotation des rouleaux, grâce à quoi la croissance du gluten et la jonction des structures gélifiées des blocs de pâte sont accélérées, et une feuille de pâte analogue à une bande continue est formée.

2. Appareil selon la revendication 1, dans lequel au moins certains desdits rouleaux sont des cylindres circulaires.

3. Appareil selon la revendication 1 ou 2, dans lequel au moins certains desdits rouleaux sont des cylindres polygonaux.

4. Appareil selon la revendication 1, 2 ou 3, dans lequel un moyen de coupe (5) est prévu à proximité d'une ouverture d'entrée de l'appareil pour sectionner des blocs de pâte d'un volume prédéterminé à partir d'une masse de pâte amenée à l'appareil.

5. Appareil selon la revendication 4, dans lequel un moyen (21) à capteur est prévu pour capter le niveau de la pâte dans l'appareil et pour produire un signal destiné à actionner ledit moyen de coupe.

6. Procédé pour joindre entre eux des blocs (6) de pâte 'au moyen de plusieurs paires opposées horizontalement de rouleaux (20, 20', 50) agencées en plusieurs étages pour définir un passage pour la pâte s'étendant sensiblement verticalement, les rouleaux pouvant tourner, les rouleaux inférieurs étant agencés de façon à être entraînés à une vitesse circonférentielle inférieure à celle des rouleaux supérieurs, et les distances entre les rouleaux des paires augmentant dans le sens vers le haut, ce procédé comprenant une augmentation et une diminution continuelles des distances entre les rouleaux des paires lorsque des blocs de pâte sont amenés entre eux, afin que les rouleaux appliquent une pression aux blocs de pâte et en relâchent la pression pendant que les blocs de pâte sont propulsés vers le bas par l'effet de pression et de relâchement et par la rotation des rouleaux, grâce à quoi la croissance du gluten et la jonction des structures gélifiées des blocs de pâte sont accélérées, et une feuille de pâte analogue à une bande continue est formée.
